(19) Europäisches Patentamt

European Patent Office

Office européen des brevets

(11) EP 0 937 745 A1

(12) EUROPÄISCHE PATENTANMELDUNG

(43) Veröffentlichungstag:
25.08.1999 Patentblatt 1999/34

(51) Int. Cl.⁶: **C08K 9/04**, C08L 21/00

(21) Anmeldenummer: 99102514.9

(22) Anmeldetag: 10.02.1999

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 23.02.1998 DE 19807629

(71) Anmelder:
**Bayer Aktiengesellschaft**
**51368 Leverkusen (DE)**

(72) Erfinder:
• **Scholl, Thomas Dr.**
**51469 Bergisch Gladbach (DE)**
• **Weidenhaupt, Hermann-Josef Dr.**
**50259 Pulheim (DE)**
• **Königshofen, Heinrich Dr.**
**51465 Bergisch-Gladbach (DE)**
• **Wendling, Peter**
**51375 Leverkusen (DE)**

(54) **Hydrophobierte, oxidische oder silikatische Füllstoffe und ihre Verwendung**

(57) Hydrophobierte, oxidische und/oder silikatische Füllstoffe, erhältlich durch Behandlung eines oxidischen und/oder silikatischen Füllstoffs mit 0,1 bis 50 Gew.-Teilen, pro 100 Gew.-Teile Füllstoff, eines Addukts von Schwefel an ungesättigten primären und/oder sekundären Alkoholen mit 3 bis 60 C-Atomen bei Temperaturen von 20 bis 250°C, wobei das Addukt erhalten wurde durch Umsetzung von 1 bis 10 Mol Schwefel pro Mol alkholischer Doppelbindung.

**Beschreibung**

Die vorliegende Erfindung betrifft hydrophobierte, oxidische oder silikatische Füllstoffe sowie die Verwendung dieser Füllstoffe zur Herstellung von Kautschukmischungen und Vulkanisaten. Die mit den hydrophobierten, oxidischen oder silikatischen Füllstoffen versetzten Kautschukmischungen und Vulkanisaten eignen sich besonders zur Herstellung von hochverstärkten, abriebbeständigen Formkörern, insbesondere zur Herstellung von Reifen, die einen niedrigen Rollwiderstand und einen hohen Abriebwiderstand aufweisen.

Die Behandlung von Füllstoffoberflächen zur Verbesserung der Füllstoff-Matrix-Ankopplung in thermoplastischen und duroplastischen Verbundwerkstoffen sowie gefüllten Kautschuksystemen ist bekannt. So wird in US 4.514.231 und 4.704.414 die Behandlung von silikatischen Füllstoffen mit polysulfidischen Silylethern, insbesondere Bis-(triethoxisilyl-propyl)-tetrasulfid, beschrieben. Nach DE 2.141.159 und 2.255.577 kann die Oberflächermodifizierung von unbehandelten Füllstoffen „in situ" dadurch erfolgen, daß man polysulfidische Silylether einer Mischung aus entsprechenden Kautschuken und unbehandeltem Füllstoff zugibt. Nachteilig an der Verwendung von polysulfidischen Silylethern zur Verbesserung der Füllstoff/Matrix-Ankopplung ist das aufwendige Herstellungsverfahren der polvsulfidischen Silylether und die damit verbundenen hohen Rohstoffkosten. Aus US 2.736.669 und 2.801.185 sind Verfahren zur Hydrophobierung von Kieselsäuren bekannt, wonach Kieselsäuren mit Alkoholen behandelt werden. Die so behandelten Kieselsäuren zeigen jedoch keine verbesserte Verstärkungswirkung in einer Kautschukmatrix.

In EP 0 631 982 wird ein spezielles Verfahren zur Herstellung von Kieselsäureaggregaten beschrieben sowie deren Verwendung zur Verstarkung von Elastomeren. Wie in EP 0 631 982 weiter ausgeführt wird, können die erhaltenen Kieselsäureaggregate in einer Nachfolgereaktion mit zusätzlichen funktionellen Gruppen versehen werden. Für die Behandlung der erhaltenen Kieselsäureaggregate zur Einführung von diversen funktionellen Gruppen können eine Vielzahl von chemischen Verbindungen mit funktionellen Gruppierungen Verwendung finden. Die insbesondere in Spalte 8 der genannten europäischen Patentarmeldungen aufgeführten siliciumfreien Verbindungen zur Behandlung der Kieselsäureaggregate bewirken noch keine ausreichende Verbesserung bei den Verstärkungsfüllstoffen im Hinblick auf die physikalischen Eigenschaften der damit hergestellten Kautschukmischungen, insbesondere wenn sie zur Herstellung von hochverstärkten, abriebbeständigen Formkörpern verarbeitet werden sollten.

Aufgabe der vorliegenden Erfindung ist es nun, aktivierte hydrophobierte oxidische oder silikatische Füllstoffe aus leicht zugänglichen Rohstoffen zur Verfügung zu stellen, die eine wesentliche Verbesserung bei gefüllten Kautschukmischungen bewirken, insbesondere im Hinblick auf beim Reifenbau wichtigen geringen Abrieb und niedrigen Rollwiderstand, hohe Naßrutschfestigkeit sowie geringe Mischungsviskosität.

Gegenstand der Erfindung sind daher neue oxidische und/oder silikatische Füllstoffe, erhältlich durch Behandlung eines oxidischen und/oder silikatischen Füllstoffs mit 0,1 bis 50 Gew.-Teilen, pro 100 Gew.-Teilen Füllstoff, eines Addukts von Schwefel an ungesättigten primären und/oder sekundären Alkoholen mit 3 bis 60 Kohlenstoffatomen bei Temperaturen von 20 bis 250°C, wobei das Addukt erhalten wurde durch Umsetzung von 1 bis 10 Mol Schwefel und/oder der entsprechenden Menge schwefelliefernder Verbindung pro Mol alkoholischer Doppelbindung.

Bevorzugt werden erfindungsgemäß solche oxidische oder silikatische Füllstoffe einer Behandlung mit den erwähnten Addukten von Schwefel an ungesättigten primären und/oder sekundären Alkoholen unterworfen, die einen Gehalt an physikalisch gebundenem Wasser von $\leq$ 4 Gew.-%, bevorzugt $\leq$ 3 Gew.-%, besonders bevorzugt $\leq$ 1 Gew.-%, aufweisen, bezogen auf die Gesamtmenge an Füllstoff.

Die zur Herstellung der erfindungsgemäßen oxidischen oder silikatischen Füllstoffe eingesetzten Addukte von Schwefel an ungesättigten Alkoholen besitzen einen Gehalt an gebundenem Schwefel von 10 bis 65 Gew.-%, insbesondere 15 bis 40 Gew.-%.

Die hydrophobierten, oxidischen oder silikatischen Füllstoffe der vorliegenden Erfindung besitzen eine Methanolbenetzbarkeit von 1 bis 55, bevorzugt 5 bis 40. Die Methanolbenetzbarkeit wird erfindungsgemäß wie folgt bestimmt:

200 mg der Kieselsäure und 50 ml Wasser werden in einen 250 ml Rundkolben mit Magnetrührer gegeben. Die hydrophobierte Kieselsäure bleibt an der Wasseroberfläehe. Anschließend taucht man die Spitze einer mit Methanol gefüllten Meßpipette in die flüssige Phase (um einen direkten Kontakt mit der Kieselsäure zu vermeiden) und läßt das Methanol langsam zußließen. Dabei wird mit dem Magnetrührer gerührt, so daß in der Flüssigkeit ein Wirbel entsteht. Es wird solange Methanol zugegeben, bis die Festsubstanz benetzt ist. Dies ist der Fall, wenn die Kieselsäure nicht mehr über die Oberfläche der flüssigen (bereits Methanol enthaltenden) Phase verteilt und die klare filmfreie Flüssigkeit sichtbar wird. Die Angabe der Methanolbenetzbarkeit erfolgt in Gew.-% Methanol in der Methanol/Wasser-Mischung nach der Formel:

$$\textit{Methanolbenetzbarkeit (in Gew.-\%)} = (0{,}79 \; x \; \textit{Anzahl ml MeOH}/0{,}79 \; x \; \textit{Anzahl ml MeOH} +50) \; x100$$

Wie erwähnt, besitzt vorzugsweise der zur Hydrophobierung eingesetzte oxidische und/oder silikatische Füllstoff einen bestimmten Wassergehalt. Dieser Wassergehalt kann eingestellt werden, in dem man den oxidischen und/oder silikatischen Füllstoff vor der Hydrophobierung bei erhöhter Temperatur, im allgemeinen 80 bis 250°C, gegebenenfalls im Vakuum trocknet, bis sich der gewünschte Wassergehalt eingestellt hat. Selbstverständlich ist es auch möglich, die Behandlung des oxidischen oder silikatischen Füllstoffs mit dem Schwefeladdukt bei den obengenannten Temperaturen durchzuführen, wobei ebenfalls das physikalisch gebundene Wasser aus dem oxidischen oder silikatischen Füllstoff entfernt wird. Bevorzugt wird der zu hydrophobierende oxidische und/oder silikatische Füllstoff vor der Behandlung mit dem Schwefeladdukt getrocknet, bis sich der gewünschte Wassergehalt eingestellt hat.

Unter dem Gehalt an physikalisch gebundenem Wasser wird in diesem Zusammenhang der Trocknungsverlust des eingesetzten oxidischen oder silikatischen Füllstoffs bei 105°C innerhalb von zwei Stunden gemäß DIN ISO 787/2 (früher DIN 53 198) verstanden.

Bevorzugt werden die hydrophobierten, oxidischen oder silikatischen Füllstoffe erhalten durch Behandlung mit 5 bis 25 Gew.-Teilen, pro 100 Gew.-Teile Füllstoff, eines zuvor genannten Schwefeladdukts. Die Behandlung der erfindungsgemäß eingesetzten Füllstoffe mit den Schwefeladdukten kann bei Temperaturen oberhalb von Raumtemperatur bis unterhalb der Zersetzungstemperatur des jeweils verwendeten Schwefeladdukts erfolgen. Die Behandlung der gegebenenfalls auf einen bestimmten Wassergehalt eingestellten oxidischen oder silikatischen Füllstoffe mit den Schwefeladdukten kann dann als beendet angesehen werden, wenn sich mit einem geeigneten Lösungsmittel die theoretische Menge Schwefeladdukt nicht mehr extrahieren läßt und die Benetzbarkeit des behandelten Füllstoffes mit Wasser wesentlich schlechter geworden ist. Die Behandlung kann jedoch auch bei einem unvollständigen Umsatz abgebrochen werden, sobald die Hydrophobie des Füllstoffs den gewünschten Bereich erreicht hat.

Wie bereits zuvor erwähnt, besitzen die erfindungsgemäßen hydrophobierten, oxidisehen oder silikatischen Füllstoffe eine bestimmte Methanolbenetzbarkeit, wobei die Methanolbenetzbarkeit den Gewichtsanteil von Methanol in einem Methanol/Wasser-Gemisch angibt, der gerade noch in der Lage ist, den behandelten Füllstoff zu benetzen. Die Bestimmung der Methanolbenetzbarkeit wurde bereits zuvor beschrieben.

Die Behandlung der eingesetzten oxidisehen oder silikatischen Füllstoffe mit dem Schwefeladdukt kann in Gegenwart eines geeigneten Lösungs- und/oder Verdünnungsmittels sowie in Gegenwart von geeigneten Katalysatoren erfolgen. Die jeweils günstige Menge an Lösungs- und/oder Verdünnungsmitteln und die jeweils günstige Menge an eingesetztem Katalysator läßt sich leicht durch entsprechende Vorversuche ermitteln.

Als Lösungs- und/oder Verdünnungsmittel können eingesetzt werden: aliphatische oder aromatische Kohlenwasserstoffe, z.B. Cyclohexan, Xylol, Mineralöl

Die zur Behandlung verwendeten Sehwefeladdukte können in bekannter Weise durch Umsetzung von Schwefel und/oder schwefelliefernden Verbindungen, wie Dialkylpolysulfide, wie z.B. Dioetylpolysulfide, Diaminopolysulfide oder Diehlorpolysulfide, mit ungesättigten primären oder sekundären Alkoholen mit 3 bis 60 Kohlenstoffatomen, bevorzugt 6 bis 36 Kohlenstoffatomen, erhalten werden.

Bevorzugt werden bei der Herstellung der Schwefeladdukte 1 bis 6 Mol Schwefel oder sehwefelliefernde Verbindungen pro Mol Doppelbindung im Alkohol eingesetzt. Bei Einsatz von sehwefelliefernden Verbindungen bezieht sich die eingesetzte Menge auf den reaktiven Schwefel.

Die Umsetzung von Schwefel und/oder schwefelliefernden Verbindungen mit den erwähnten ungesättigten primären und/oder sekundären Alkoholen wird üblicherweise bei Temperaturen von 100 bis 160°C, vorzugsweise 120 bis 150°C, gegebenenfalls unter Druck bei 1 bis 12 bar, vorzugsweise 1 bis 6 bar, gegebenenfalls in Gegenwart eines Katalysators, wie Schwefelwasserstoff, Dischwefeldichlorid oder Aminen, durchgeführt. Derartige Schwefeladditionen an ungesättigten Verbindungen sind bekannt. In diesem Zusammenhang verweisen wir auf EP 531 842.

Die günstigste Katalysatormenge für die erwähnte Schwefeladdition an die ungesättigten Alkohole läßt sich ebenfalls leicht durch geeignete Vorversuche ermitteln und beträgt üblicherweise 0,1 bis 5 Gew.-%, bezogen auf den ungesättigten Alkohol.

Als oxidische und/oder silikatisehe Füllstoffe werden solche oxidische und/oder silikatische Füllstoffe eingesetzt, die natürlich vorkommen oder durch synthetische Verfahren gewonnen werden können, und die aufgrund ihres Gehalts an Hydroxyl- oder Oxidgruppen oberflächlich mit den eingesetzten Schwefeladdukten unter Veresterung reagieren können.

Bevorzugt werden solche oxidische oder silikatische Füllstoffe für die erfindungsgemäße Hydrophobierungsreaktion eingesetzt, die einen pH-Wert von 3 bis 12, bevorzugt 4 bis 8, aufweisen.

Besonders bevorzugt sind hoehdisperse Kieselsäuren, hergestellt z.B. durch Fällungen von Lösungen von Silikaten oder durch Flammenhydrolyse von Siliciumhalogeniden mit spezifischen Oberflächen von 5 bis 1000, vorzugsweise 20 bis 400 $m^2/g$ (BET-Oberfläche) und mit Primärteilchengrößen von 10 bis 400 nm. Die Kieselsäure können gegebenenfalls auch als Mischoxide mit anderen Metalloxiden wie Aluminium-, Magnesium-, Kalzium-, Barium-, Zink-, Zirkonium-, Titanoxiden vorliegen. Desweiteren sind bevorzugt synthetische Silikate wie Aluminiumsilikat, Erdalkalisilikate, wie Magnesiumsilikat und/oder Kaliziumsilikat, mit BET-Oberflächen von 20 bis 400 $m^2/g$ mit Primärteilchendurehmessern von 10 bis 400 nm. Desweiteren natürliche Silikate, wie Kaolin, und andere natürlich vorkommenden Kieselsäuren, Metallhydroxide wie Aluminiumhydroxid und Magnesiumhydroxid. Ganz besonders bevorzugt werden eingesetzt, gefällt Kieselsäuren und/oder gefüllte Silikate mit 20 bis 400 m$^2$/g (BET-Oberfläche) und mit Primärteilchengrößen von 10 bis 400 nm.

Die eingesetzten ungesättigten primären und/oder sekundären Alkohole können in der Kohlenwasserstoffkette durch Estergruppierungen, Sauerstoffatome, Schwefelatome oder durch Aminogruppierungen unterbrochen sein oder durch Alkyl-, Alkyl-aryl- oder Arylaminogruppen mit 1 bis 18 Kohlenstoffatomen, durch weitere Hydroxylgruppen, Carbonsäuregruppen und deren Salzen, durch Fluor, Chlor oder Bromatome sowie durch Carbonsäure-C$_1$-C$_{18}$-Alkyl- oder -arylester, Aminogruppen oder durch Alkyl-aryl- oder Arylaminogruppen mit 1 bis 18 Kohlenstoffatomen substituiert sein. Besonders bevorzugte ungesättigte primäre und/oder sekundäre Alkohole sind: Allylalkohol, Propargylalkohol, 1,4-Butendiol, 2-Methylen-1,3-propandiol, 2-Hexen-1-ol, 5-Hexen-1,2-diol, 1,5-Hexadien-3,4-diol, 3-Cyclohexen-1,1-dimethanol, 1-Octen-3-ol, Undecyclen-alkohol, Dodecenalkohol, Hexadecenol, Oleylalkohol, Ricinolsäure, Ricinusöl, Zimtalkohol, Hydroxiethyl-(meth)-acrylat, 4-Hydroxibutyl-(meth)-acrylat.

Die ungesättigten oben erwähnten Alkohole können alleine oder im Gemisch eingesetzt werden oder auch im Gemisch mit hydroxylgruppenfreien, gesättigten und/oder ungesättigten Verbindungen, die dann an der Reaktion mit Schwefel gegebenenfalls nicht teilnehmen und lediglich an den eingesetzten Füllstoff in physikalischer Weise gebunden sind. Beispiele für solche gesättigten und/oder ungesättigten Verbindungen sind: Silikonöle, Paraffinöle, Mineralöle sowie ungesättigte Kohlenwasserstoffe, wie natürliche pflanzliche ungesättigte Öle, wie Sojaöl, Olivenöl, Sonnenblumenöl, Isobutylen, Diisobutylen, Tetrapropylen, Dodecen-(1), Heptadecen-(7) und Eicosen.

Selbstverständlich ist es auch noch möglich neben den zur Behandlung der eingesetzten oxidischen und/oder silikatischen Füllstoffe eingesetzten Schwefeladdukte noch andere bekannte Hydrophobierungsmittel zur weiteren Modifizierung der eingesetzten oxidischen und/oder silikatischen Füllstoffe zu verwenden. Erwähnenswert sind hierbei polysulfidische Silylether, wie Bis-(triethoxysilylpropyl)-tetrasulfid, Polydimethylsiloxane, die gegebenenfalls weitere Si-OH-Gruppen tragen, Octamethylcyclotetrasiloxan, Hexamethyldisilazan, Vinylsilane, wie Triethoxivinylsilan, Alkylsilane, wie Octyltriethoxisilan und Octadecyltriethoxisilan, Aminosilane, wie 3-Aminopropyl-triethoxisilan.

Ein weiterer Gegenstand der vorliegenden Erfindung ist die Verwendung der erfindungsgemäß hergestellten hydrophobierten oxidischen und/oder silikatischen Füllstoffe für die Herstellung von Kautschukmischungen.

Als Kautschuke, die allein oder in Kombination untereinander mit den hydrophobierten Füllstoffen abgemischt werden können, eignen sich neben Naturkautschuk auch alle bekannten Synthesekautschuke. Bevorzugte Synthesekautschuke sind beispielsweise bei W. Hofmann, Kautschuktechnologie, Gentner Verlag, Stuttgart 1980, beschrieben. Sie umfassen u.a.

BR      - Polybutadien
ABR     - Butadien/Acrylsäure-C$_{1-4}$-alkylester-Copolymere
CR      - Polychloropren
IR      - Polyisopren
SBR     - Styrol/Butadien-Copolymerisate mit Styrolgehalten von 1-60, vorzugsweise 20-50 Gew.-%
IIR     - Isobutylen/Isopren-Copolymerisate
NBR     - Butadien/Acrylnitril-Copolymere mit Acrylnitrilgehalten von 5-60, vorzugsweise 10-40 Gew.-%
HNBR    - teilhydrierter oder vollständig hydrierter NBR-Kautschuk
EPDM    - Ethylen/Propylen/Dien-Copolymerisate

sowie Mischungen dieser Kautschuke. Für die Herstellung von Kfz-Reifen mit Hilfe der oberflächenmodifizierten Füllstoffe sind insbesondere Naturkautschuk, Emulsions-SBR sowie Lösungs-SBR-Kautschuke mit einer Glastemperatur oberhalb von -50°C, die gegebenenfalls mit Silylethern oder anderen funktionellen Gruppen, modifiziert sein können, wie z.B. in der EP-A 447 066 beschrieben, Polybutadienkautschuk mit hohem 1,4-cis-Gehalt (>90%), der mit Katalysatoren auf Basis Ni, Co, Ti oder Nd hergestellt wird, sowie Polybutadienkautschuk mit einem Vinylgehalt von 0-75 % sowie deren Mischungen von Interesse.

Neben den erfindungsgemäßen aktivierten und hydrophobierten oxidischen und/oder silikatischen Füllstoffen können die Kautschukmischungen weitere Füllstoffe enthalten. Dies sind neben unbehandelten oxidischen und/oder silikatischen Füllstoffe Ruße. Bevorzugte weitere Füllstoffe sind z.B.

-    hochdisperse Kieselsäuren, hergestellt z.B. durch Fällung von Silikaten oder Flammenhydrolyse von Siliciumhalogeniden mit spezifischen Oberflächen von 5 bis 1 000, vorzugsweise 20 bis 400 m$^2$/g (BET-Oberfläche) und mit Primärteilchengrößen von 10 bis 400 nm. Die Kieselsäuren können gegebenenfalls auch als Mischoxide mit anderen Metalloxiden wie Al-, Mg-, Ca-, Ba-, Zn-, Zr-, Ti-Oxiden vorliegen,

-    synthetische Silikate, wie Aluminiumsilikat, Erdalkalisilikat wie Magnesiumsilikat oder Calciumsilikat, mit BET-Oberflächen von 20 bis 400 m$^2$/g und Primärteilchendurchmessern von 10 bis 400 nm,

- natürliche Silikate, wie Kaolin und andere natürlich vorkommende Kieselsäure,

- Glasfasern und Glasfaserprodukte (Matten, Stränge) oder Mikroglaskugeln,

- Metalloxide, wie Zinkoxid, Calciumoxid, Magnesiumoxid, Aluminiumoxid,

- Metallcarbonate, wie Magnesiumcarbonat, Calciumcarbonat, Zinkcarbonat,

- Metallhydroxide, wie z.B. Aluminiumhydroxid, Magnesiumhydroxid,

- Kautschukgele

- Ruße.

Die hierbei zu verwendenen Ruße sind nach dem Flammruß, Furnace. oder Glasrußverfahren hergestellt und besitzen BET-Oberflächen von 20 bis 200 m$^2$/g, wie z.B. SAF, ISAF-, HAF-, FEF- oder GPF-Ruße.

Besonders bevorzugt werden hochdisperse gefällt Kieselsäuren und Russe eingesetzt. Die genannten Füllstoffe können alleine oder im Gemisch verwendet werden, wobei das günstigste Mischungsverhältnis durch Vorversuche ermittelt werden kann.

Die erfindungsgemäß hergestellten Füllstoffe können in üblicher Weise in die oben erwähnten Kautschuke eingemischt werden, beispielsweise mit Hilfe von Walzen, Innenmischern und Mischextrudern.

Gemäß einer anderen Variante können die erfindungsgemäßen Füllstoffe mit der Lösung eines Kautschuks in einem organischen Lösungsmittel vermischt und anschließend das Lösungsmittel entfernt werden. Bevorzugt wird das Lösungsmittel dabei mittels Wasserdampf ausgetrieben. Die Kautschuklösungen haben hierbei einen Gehalt von Festkautschuk von 5 bis 40 Gew.-%, bevorzugt 10 bis 30 Gew.-%, bezogen auf die Gesamtmenge des eingesetzten organischen Lösungsmittels.

Bevorzugte organische Lösungsmittel sind aliphatische und/oder cycloaliphatische Kohlenwasserstoffe mit 4 bis 12 Kohlenstoffatomen, wie Pentan, Hexan, Cyclohexan, Heptan, Octan, Benzol, Toluol und/oder Xylol. Die jeweils günstigste Menge an einzusetzenden Lösungsmittel ist leicht durch entsprechende Vorversuche zu ermitteln.

Die eingesetzte Menge an erfindungsgemäß hydrophobierten, silikatischen und/oder oxidischen Füllstoffen beträgt 20 bis 150 Gew.-Teile, bevorzugt 40 bis 100 Gew.-Teile, Füllstoff pro 100 Gew.-Teile eingesetzten Kautschuks.

Selbstverständlich ist es möglich, den erfindungsgemäßen Füllstoffen enthaltenden Kautschukmischungen noch andere bekannte Füllstoffe, Stabilisatoren, Verarbeitungshilfsmittel sowie Füllstoffaktivatoren zuzusetzen. Genannt werden beispielsweise Bis-(triethoxysilylpropyl)-tetrasulfid, 3-Thiocyanatopropyltriethoxisilan oder solche wie in EP-A 466 066 oder EP-A 670 347 beschrieben.

Zusätzlich können die Kautschukmischungen noch Kautschukhilfsprodukte enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, Aktivatoren und/oder Vulkanisationsverzögerer, die in der Kautschukindustrie bekannt sind.

Die zugesetzten Additive bzw. Kautschukhilfsprodukte können dabei in Mengen von bis zu 70 Gew.-%, bezogen auf den eingesetzten Kautschuk, eingesetzt werden. Die Mengen der Additive richtet sich dabei nach dem jeweiligen Verwendungszweck der Kautschukmischungen.

Aufgrund des Gehaltes an gebundenem Schwefel können die erfindungsgemäßen, oxidischen und/oder silikatischen Füllstoffe auch alleine als Vernetzer bei der Vulkanisation dienen. Selbstverständlich ist es möglich, den Kautschukmischungen noch zusätzlich die bekannten Schwefelvernetzer und/oder peroxidischen Vernetzer zuzugeben, in den ebenfalls bekannten Mengen, gegebenenfalls mit geeigneten Vulkanisationsbeschleunigern. Die Vulkanisationsbeschleuniger und die Vernetzer werden dabei in allgemeiner Menge von 0,1 bis 10 Gew.-, bevorzugt 0,1 bis 5 Gew.-%, bezogen auf den eingesetzten Kautschuk, zugegeben. Die Vulkanisation kann in üblicher Weise durchgeführt werden, z.B. bei Temperaturen von 100 bis 200°C, gegebenenfalls unter Druck von 10 bis 200 bar.

Die erfindungsgemäßen Kautschukmischungen können zur Herstellung von Kautschukvulkanisaten verwendet werden, die sich wiederum zur Herstellung von Formkörpern aller Art, z.B. für die Herstellung von Kabelmäntel, Schläuchen, Treibriemen, Förderbändern, Walzenbelägen, Reifen, Schuhsohlen, Dichtungsringen und Dämpfungselementen eignen.

Durch den Zusatz der erfindungsgemäßen hydrophobierten, silikatischen und/oder oxidischen Füllstoffe reduzieren sich die Rohstoffkosten gegenüber den bekannten Kieselsäure/Silan-Füllstoffsystemen beträchtlich. Darüber hinaus werden die rheologischen Eigenschaften der Kautschukmischungen verbessert (niedrige Mischungsviskosität, geringere Spritzquellung) und es wird ein deutlich günstigeres dynamisches Dämpfungsverhalten (geringer Heat built up, niedriger Rollwiderstand) bei den hiermit hergestellten Kautschukvulkanisate erreicht. Außerdem zeigen die mit den erfindungsgemäßen hydrophobierten, oxidischen und/oder silikatischen Füllstoffe hergestellten Kautschukvulkanisate ein verbessertes Alterungsverhalten unter thermischer und dynamischer Belastung (Reversionsbeständigkeit), verbunden mit einer hohen Abriebbeständigkeit.

**Beispiele**

**Beispiel 1 a)**

Addukt von Schwefel an Oleylalkohol

134,3 g (0,5 Mol) Oleylalkohol und 64,1 g (2 Mol) Schwefel wurden bei 150°C unter Rühren mit 0,8 g Dischwefeldichlorid versetzt. Anschließend rührte man zwei Stunden bei dieser Temperatur unter leichtem Unterdruck (800 mbar) nach. Das Rohprodukt wurde daraufhin auf Raumtemperatur abgekühlt und mit 200 ml abs. Ethanol versetzt. Nach 14 Stunden wurde der ausgefallene Schwefel abfiltriert und das Ethanol im Vakuum entfernt. Man erhielt 188,3 g eines gelbbraunen Öls mit einem Schwefelgehalt von 28,2 Gew.-% und der Viskosität 1 Pa·s.

**Beispiel 1 b)**

Aktivierte und hydrophobierte Kieselsäure

250 g Vulkasil S (gefällte Kieselsäure mit BET-Oberfläche 180 $m^2$/g, Trocknungsverlust nach DIN 787/25 - 6 Gew.-%, Bayer AG) wurden unter Rühren an einer Destillationsbrücke 3,5 Stunden auf 130°C erhitzt, wobei ca. 12 ml Wasser entfernt wurden. Gehalt an physikalisch gebundenem Wasser: <0,5 %. Dann tropfie man 44,1 g des Schwefeladdukts aus Beispiel 1 a innerhalb von einer Stunde bei 150°C hinzu und rührte 1 Stunde nach. Man erhielt 273 g eines hellen Pulvers mit einer Methanolbenetzbarkeit von 23 Gew.-%.

**Beispiel 1 c)**

Aktivierte und hydrophobierte Kieselsäure

In einem 40 1 Rührkessel werden 4 kg gefällte Kieselsäure Vulkasil S (Bayer AG, BET-Oberfläche 180 $m^2$/g, Trocknungsverlust bei 105°C nach DIN 787/2 5 - 6 Gew.-%) unter Rühren 6 Stunden auf 200°C erhitzt, wobei 200 g Wasser abdestilliert werden. Dann kühlt man auf 140°C ab und setzt unter Rühren 600 g Adduktes von Oleylalkohol und Schwefel gemäß Beispiel 1a hinzu. Anschließend wird drei Stunden bei 140°C nachgerührt. Man erhielt 4,38 kg einer aktivierten und hydrophobierten Kieselsäure mit einer Methanolbenetzbarkeit von 20 Gew.-% und einem Gewichtsverlust bei 105°C/2 h von 1,5 %.

**Beispiel 2 a**

Addukt von Schwefel an Undecylenalkohol

167,7 g 10-Undecen-1-ol und 78,8 g Schwefel wurden unter Rühren 18 Stunden auf 150°C erhitzt, Nach dem Entgasen im schwachen Vakuum erhielt man 244,2 g eines braunen viskosen Öls mit einem Schwefelgehalt von 32 Gew.-%.

**Beispiel 2 b)**

Aktivierte und hydrophobierte Kieselsäure

500 g Vulkasil S (gefällte Kieselsäure mit BET-Oberfläche 180 $m^2$/g, Bayer AG) und 75 g des Adduktes aus Beispiel 2 a wurden gemeinsam unter Rühren 14 Stunden auf 140°C (Ölbadtemperatur) erhitzt, wobei Wasser abdestillierte. Anschließend wurde bei ca. 75°C durch Anlegen von 200 mbar Vakuum 30 Minuten entgast. Man erhielt 557 g eines hellbraunen Pulvers, die so behandelte Kieselsäure besaß eine Methanolbenetzbarkeit von 6 Gew.-%.Wassergehalt <1 % (Trocknungsverlust nach 2 h bei 105°C).

**Beispiel 3 (Vergleichsbeispiel)**

500 g Vulkasil S (gefällte Kieselsäure mit BET-Oberfläche 180 $m^2$/g, Trocknungsverlust nach DIN 787/25 - 6 Gew.-%, Bayer AG) wurden unter Rühren an einer Destillationsbrücke 5 Stunden auf 150°C erhitzt. Dann tropfte man 75 g 2,2-Bis-(hydroxiethyl)-tetrasulfid (HO-CH$_2$CH$_2$-S$_4$-CH$_2$CH$_2$-OH) innerhalb von einer Stunde hinzu und rührte 1 Stunde bei 150°C nach. Man erhielt 554 g eines hellen Pulvers. Die so behandelte Kieselsäure ist nicht hydrophobiert sondern wird von Wasser sofort benetzt (Methanolbenetzbarkeit 0 %).

**Beispiel 4 (Vergleichsbeispiel)**

50 g Vulkasil S wurden bei 50°C unter kräftigem Rühren mit 8,82 g des Schwefeladdukts gemäß Beispiel 1a vermischt. Die so behandelte Kieselsäure (Wassergehalt 5 Gew.-%) ist nicht hydrophobiert sondern wird von Wasser sofort benetzt.

**Beispiel 5**

Die folgenden Kautschukmischungen wurden in einem 1,5l Kneter bei 130°C hergestellt. Schwefel und Beschleuniger wurden zum Schluß auf der Walze bei 50°C zugegeben.

|  | A | B | C |
|---|---|---|---|
| L-SBR-Kautschuk Buna VSL 5025-1 (Bayer AG) | 96 | 96 | 96 |
| BR-Kautschuk Buna CB 24 (Bayer AG) | 30 | 30 | 30 |
| Kieselsäure unmodifiziert (Vulkasil S, Bayer AG) | 80 | 80 | 0 |
| Kieselsäure gem. Beispiel 1 b | 0 | 0 | 80 |
| Ruß Corax 339 (Degussa) | 6,5 | 6,5 | 6,5 |
| aromat. Öl | 8 | 8 | 8 |
| Zinkoxid | 2,5 | 2,5 | 2,5 |
| Stearinsäure | 1 | 1 | 1 |
| Antioxidans Vulkanox 4020 (Bayer) | 1 | 1 | 1 |
| Ozonschutzwachs Antilux 654 (Rheinchemie) | 1,5 | 1,5 | 1,5 |
| Bis-triethoxysilylpropyl)-tetrasulfid Si 69 (Degussa) | 0 | 6,5 | 0 |
| Schwefel | 1,5 | 1,5 | 1,5 |
| Beschleuniger Vulkacit CZ (Bayer AG) | 1,5 | 1,5 | 1,5 |
| Beschleuniger Vulkacit D (Bayer AG) | 2 | 2 | 2 |
| Mischungsviskosität ML 1+4 (100°C) | 148 | 92 | 74 |

Die Kautschukmischungen wurden anschließend bei 160°C vulkanisiert. Die Vulkanisationszeiten betrugen:

|  | 35 Min. | 35 Min. | 45 Min. |
|---|---|---|---|
|  | A | B | C |
| Vulkanisationseigenschaften |  |  |  |
| Spannungswert bei 100 % Dehnung (MPa) | 2,8 | 3,6 | 4,1 |
| Härte Shore A bei 23 °C | 83 | 72 | 74 |
| Härte Shore A bei 70°C | 77 | 69 | 71 |
| Zugfestigkeit (MPa) | 17,3 | 19,9 | 17 |

(fortgesetzt)

| | 35 Min. | 35 Min. | 45 Min. |
|---|---|---|---|
| | A | B | C |
| Vulkanisationseigenschaften | | | |
| Bruchdehnung (%) | 670 | 380 | 430 |
| Rückprallelastizität (%) bei 70°C | 48 | 53 | 56 |
| Abrieb (ccm) nach DIN 53 516 | 109 | 87 | 90 |

Neben dem verbesserten Verarbeitungsverhalten der unvulkanisierten Kautschukmischungen, das sich in der niedrigen Mooney-Viskosität manifestiert, weisen die Vulkanisateigenschaften bei Einsatz der erfindungsgemäßen oberflächenmodifizierten Füllstoffe Vorteile in der dynamischen Dämpfung bei 70°C auf die erfahrungsgemäß mit einem geringeren Rollwiderstand von Kraftfahrzeugreifen korreliert. Vulkanisate, die unter Einsatz der erfindungsgemäßen oberflächenmodifizierten Füllstoffe hergestellt wurden, besitzen darüberhinaus erheblich günstigere Rohstoffkosten, da sie auch ohne teures Silan ein sehr gutes mechanisches Eigenschaftsprofil zeigen.

**Beispiel 6:**

Die folgenden Substanzen wurden in einem 1,5l Kneter (Drehzahl UpM, Füllgrad 65 %, Starttemperatur 50°C, Dauer: 5 Minuten) gemischt. Anschließend wurden die Mischungen entnommen, erkalten lassen und noch einmal unter diesen Bedingungen im Kneter behandelt. Schwefel und Beschleuniger wurden zum Schluß auf einer Walze bei 50°C zugemischt.

| Mischungsbestandteile: | A | B |
|---|---|---|
| Lösungs-SBR Buna VSL 5025-1 (Bayer AG) | 96 | 96 |
| Polybutadierkautschuk Buna CB 24 (Bayer AG) | 30 | 30 |
| Kieselsäure Vulkasil S (Bayer AG) | 80 | 0 |
| Kieselsäure gemäß Beispiel 1 c | 0 | 88 |
| Ruß Corax N 339 (Degussa) | 6,5 | 6,5 |
| Stearinsäure | 1 | 1 |
| Zinkoxid RS (Bayer AG) | 2,5 | 2,5 |
| aromat. Mineralöl Renopal 450 (Fuchs) | 8 | 8 |
| Alterungsschutzmittel Vulkanox 4020 (Bayer) | 1 | 1 |
| Alterungsschutzmittel Vulkanox HS (Bayer) | 1 | 1 |
| Bis-(triethoxisilylpropyl)-tetrasulfid Si 69 (Degussa) | 6,5 | 0 |
| Ozonschutzwachs Antilux 654 (Rheinchemie) | 1,5 | 1,5 |
| Auf der Walze wurden zugemischt: | | |
| Sulfenamidbeschleuniger Vulkacit CZ (Bayer) | 1,5 | 1,5 |
| Guanidinbeschleunigr Vulkacit D (Bayer) | 2 | 2 |
| Schwefel | 1,5 | 1,5 |
| Mischungsviskosität ML 1+4 (100°C) | 105 | 81 |

Die Mischungen wurden anschließend bei 160°C vulkanisiert. Vulkanisationszeiten:

| | 45 Min. | 55 Min |
|---|---|---|
| | A | B |
| **Vulkanisationseigenschaften** | | |
| Spannungswert bei 100 % Dehnung (MPa) | 3,6 | 4,3 |
| Spannungswert bei 300 % Dehnung (MPa) | 14,6 | 12,5 |
| Zugfestigkeit (MPa) | 16,8 | 18 |
| Bruchdehnung (%) | 332 | 43β |
| Härte Shore A bei 23°C (Shore A) | 72 | 75 |
| Rückprallelastizität bei 23°C (%) | 28 | 25,5 |
| Rückprallelastizität bei 70°C (%) | 51,6 | 54,7 |
| tan delta bei 0°C (nach Roelig) | 0,475 | 0,537 |
| tan delta bei 60°C (nach Roelig) | 0,124 | 0,101 |

Die Prüfergebnisse belegen das verbesserte Verarbeitungsverhalten (geringere Mischungsviskosität) sowie das überlegene dynamische Dämpfungsverhalten (höhere Dämpfung bei 0°C für bessere Naßrutschfestigkeit, geringere dynamische Dämpfung bei 60°C für geringeren Rollwiderstand von KFz-reifen, gemessen als tan delta).

**Patentansprüche**

1. Hydrophobierte, oxidische und/oder silikatische Füllstoffe, erhältlich durch Behandlung eines oxidischen und/oder silikatischen Füllstoffs mit 0,1 bis 50 Gew.-Teilen, pro 100 Gew.-Teile Füllstoff, eines Addukts von Schwefel an ungesättigten primären und/oder sekundären Alkoholen mit 3 bis 60 C-Atomen bei Temperaturen von 20 bis 250°C, wobei das Adduct erhalten wurde durch Umsetzung von 1 bis 10 Mol Schwefel Schwefel und/oder der entsprechenden Menge schwefelliefernder Verbindung pro Mol alkholischer Doppelbindung.

2. Oxidische und/oder silikatische Füllstoffe nach Anspruch 1, dadurch gekennzeichnet, daß die oxidischen und/oder silikatischen Füllstoffe mit den in Anspruch 1 erwähnten Addukten von Schwefel an ungesättigten primären und/oder sekundären Alkoholen behandelt werden, die einen Gehalt an physikalisch gebundenem Wasser von kleiner gleich 4 Gew.-%, bezogen auf die Gesamtmenge an Füllstoff besitzen.

3. Oxidische und/oder silikatische Füllstoffe nach Anspruch 1, dadurch gekennzeichnet, daß die zur Behandlung eingesetzten Addukten von Schwefel an ungesättigten Alkoholen einen Gehalt an gebundenem Schwefel von 10 - 65 Gew.-% besitzen.

4. Oxidische und/oder silikatische Füllstoffe nach Anspruch 1, dadurch gekennzeichnet, daß die eingesetzten oxidischen und/oder silikatischen Füllstoffe eine Methanolbenetzbarkeit von 1 - 55 Gew.-% besitzen, wobei die Methanolbenetzbarkeit sich wie folgt bestimmt:

$$\textit{Methanolbenetzbarkeit (in Gew.-\%)} = \textit{(0,79 x Anzahl ml MeOH/0,79 x Anzahl ml MeOH+50) x100}$$

5. Verwendung der Füllstoffe nach Anspruch 1 zur Herstellung von Kautschukmischungen aller Art.

Europäisches
Patentamt

# EUROPÄISCHER RECHERCHENBERICHT

Nummer der Anmeldung

EP 99 10 2514

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| P,X | WO 98 47955 A (SCHOLL THOMAS ;BAYER AG (DE)) 29. Oktober 1998<br>* Zusammenfassung; Ansprüche; Beispiele *<br>--- | 1-5 | C08K9/04<br>C08L21/00 |
| P,X | EP 0 890 600 A (BAYER AG) 13. Januar 1999<br>* Zusammenfassung; Ansprüche; Beispiele 1,2,4,6 *<br>* Seite 3, Zeile 12 - Zeile 26 *<br>--- | 1-5 | |
| A | EP 0 753 549 A (BAYER AG) 15. Januar 1997<br>* Zusammenfassung; Ansprüche; Beispiele 5,6 *<br>----- | | |

| | |
|---|---|
| | RECHERCHIERTE SACHGEBIETE (Int.Cl.6)<br><br>C08K |

Der vorliegende Recherchenbericht wurde für alle Patentansprüche erstellt

| Recherchenort | Abschlußdatum der Recherche | Prüfer |
|---|---|---|
| DEN HAAG | 15. April 1999 | Mettler, R-M |

**EP 0 937 745 A1**

**ANHANG ZUM EUROPÄISCHEN RECHERCHENBERICHT**
**ÜBER DIE EUROPÄISCHE PATENTANMELDUNG NR.**  EP 99 10 2514

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-04-1999

| Im Recherchenbericht angeführtes Patentdokument | | Datum der Veröffentlichung | Mitglied(er) der Patentfamilie | | Datum der Veröffentlichung |
|---|---|---|---|---|---|
| WO 9847955 | A | 29-10-1998 | DE | 19717091 A | 29-10-1998 |
| | | | AU | 7525298 A | 13-11-1998 |
| EP 0890600 | A | 13-01-1999 | DE | 19808746 A | 21-01-1999 |
| | | | JP | 11035742 A | 09-02-1999 |
| EP 0753549 | A | 15-01-1997 | DE | 19549034 A | 02-01-1997 |
| | | | CA | 2179866 A | 29-12-1997 |
| | | | JP | 9012922 A | 14-01-1997 |
| | | | US | 5780531 A | 14-07-1998 |

EPO FORM P0461

Für nähere Einzelheiten zu diesem Anhang : siehe Amtsblatt des Europäischen Patentamts, Nr.12/82

11